# EUROPEAN PATENT SPECIFICATION

(11) **EP 4 573 009 B1**
(45) Date of publication and mention of the grant of the patent: **01.07.2026**
(21) Application number: 23761451.6
(22) Date of filing: 18.08.2023
(51) Int. Cl.: B64D 27/24, B64D 31/10

(54) **A SYSTEM AND METHOD FOR AN AIRCRAFT**
SYSTEM UND VERFAHREN FÜR EIN FLUGZEUG
SYSTÈME ET PROCÉDÉ POUR UN AÉRONEF

(30) Priority: 19.08.2022 SE 2250982
(43) Date of publication of application: 25.06.2025
(73) Proprietor: Heart Aerospace AB, 417 55 Göteborg (SE)
(72) Inventor: FARAG, Bassem, 425 34 Hisings Kärra (SE); AGUILERA MEDINA, Luis Antonio, 414 81 Göteborg (SE); DE OLIVEIRA SPIGOLON, Fabrício, 442 39 Kungälv (SE)
(74) Representative: Murgitroyd & Company
(86) International application number: PCT/EP2023/072821
(87) International publication number: WO 2024/038189

(56) References cited:
- US-A1- 2021 139 154
- US-A1- 2022 204 173
- US-A1- 2022 250 759

## Description

### TECHNICAL FIELD

The present disclosure relates to a system for redistributing power in an aircraft (airplane) when one or more energy storage units and/or propulsion units malfunctions, e.g. during flight. The present disclosure also relates to a method for redistributing power in an aircraft.

### BACKGROUND

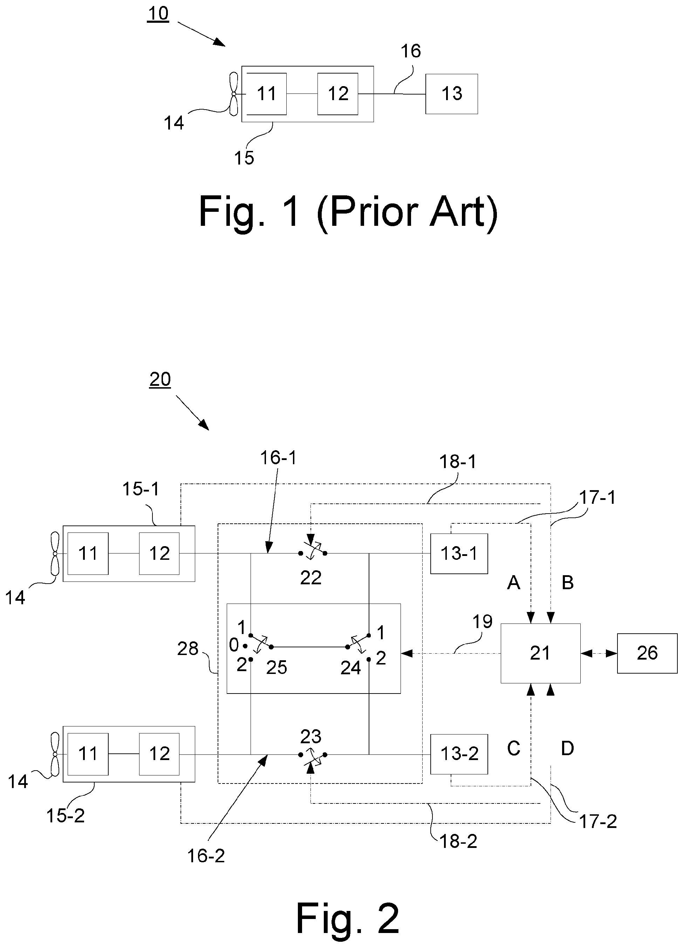

The propulsion system in an electrically powered airplane is a system that needs to be designed to maintain operation at all times. In order to reduce the risk of catastrophic failure during flight, a plurality of powertrain units (as disclosed in Figure 1) may be provided, wherein each powertrain unit has a propulsion unit being powered by an energy storage unit, e.g. a battery. However, if an airplane is designed to have four powertrain units and a malfunction occurs in one of the propulsion units and/or energy storage units during flight, the airplane will lose the propulsion provided by the powertrain unit where the malfunctioning unit is placed. This will have a direct impact on the performance of the propulsion system, even though parts of the malfunctioning powertrain unit still are operational.

Prior art document US 2022/0204173 A1 discloses, according to its abstract, an electrical energy supply network of an aircraft equipped with a plurality of electrical loads to be supplied and includes at least two generators of a turbogenerator of the aircraft, each suitable for providing an electrical energy source, and at least one stator associated with a rectifier. The stators of the generators are mounted in parallel on at least two distribution buses designed to supply the plurality of electrical loads. The supply network also includes contactors suitable for electrically connecting or disconnecting the distribution buses from each other.

### SUMMARY

There is a need to provide a system to discontinue using a malfunctioning unit (propulsion unit or energy storage unit of a powertrain) and re-allocate use of the part that is still operational to provide propulsion to the airplane during flight.

An object of the present disclosure is to provide a system which seeks to mitigate, alleviate, or eliminate one or more of the above-identified deficiencies in the art and disadvantages singly or in any combination and to provide a method for redistributing power in an aircraft.

This object is obtained by a system according to claim 1.

The control system may be configured to control the at least one set of reconfiguration switches in order to connect at least one energy storage unit and at least one propulsion unit to at least one common DC bus.

This object is also obtained by a method according to claim 10.

An advantage with the present invention is that resources within a powertrain unit system, i.e. energy storage unit or propulsion unit, that are still operational may be used to provide propulsion even by disconnecting malfunctioning units and rerouting power.

Further aspects and advantages may be obtained by a skilled person from the detailed description.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a prior art powertrain unit;
Figure 2 illustrates a system for redistributing power;
Figure 3 illustrates a second embodiment of a system for redistributing power with an auxiliary power supply;
Figure 4 illustrates a third embodiment of a system for redistributing power with an auxiliary power supply and a common DC bus;
Figure 5 illustrates a fourth embodiment of a system for redistributing power with two subsystems (one for each side of an aircraft).
Figure 6 illustrates a fifth embodiment of a system for redistributing power with two subsystems and two auxiliary power supplies (one for each side of an aircraft) and a distributed control system.
Figure 7 is a flow chart illustrating a method for redistributing power in an aircraft.

### DETAILED DESCRIPTION

Aspects of the present disclosure will be described more fully hereinafter with reference to the accompanying drawings. The system and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

Some of the example embodiments presented herein are directed towards a system and a method for redistributing energy reserves by distributing power in an aircraft.

The aircraft may for example be one or more of: an airplane, a fixed-wing aircraft, a conventional or short take-off and landing (CTOL or STOL) aircraft, a monoplane, and adapted to be flown by a pilot on board the aircraft. The aircraft or airplane may for example comprise one or more of: (braced) wings, a fuselage, an empennage, a cockpit, a passenger cabin, flight control surfaces (such as ailerons, elevators, a rudder, flaps, air brakes, etc.), and a (wheeled and/or retractable) landing gear.

Figure 1 illustrates a powertrain unit 10 according to prior art. The powertrain unit 10 comprises a propulsion unit 15 and an energy storage unit 13, wherein the propulsion unit is powered by the energy storage unit 13 via a local direct current, DC, bus, 16. The propulsion unit 15 comprises an alternating current, AC, motor 11 and a DC/AC inverter 12, and the motor 11 is mechanically connected to a propeller 14. The energy storage unit 13 may be any type of unit configured to store electric energy, e.g. a battery. The DC bus 16 may comprise one or more power/feeding lines, and as an example one power/feeding line may be connected to a positive terminal of the energy storage unit 13 and one power/feeding line may be connected to a negative terminal of the energy storage unit 13. However, in order to simplify the drawings, a single line 16 is provided to illustrate the local DC bus within each powertrain unit 10 in the example embodiments.

In the description in connection with figures 2-6, switches are used to reconfigure the interconnection network between propulsion units and energy storage units (as well as auxiliary power supplies when such are available in the system). Each switch is configured to open and close the connection in a DC bus configuration to connect/disconnect an energy storage unit or propulsion unit from the feeding/power line, but for simplicity only one switch is illustrated to control the connection in the DC busses below.

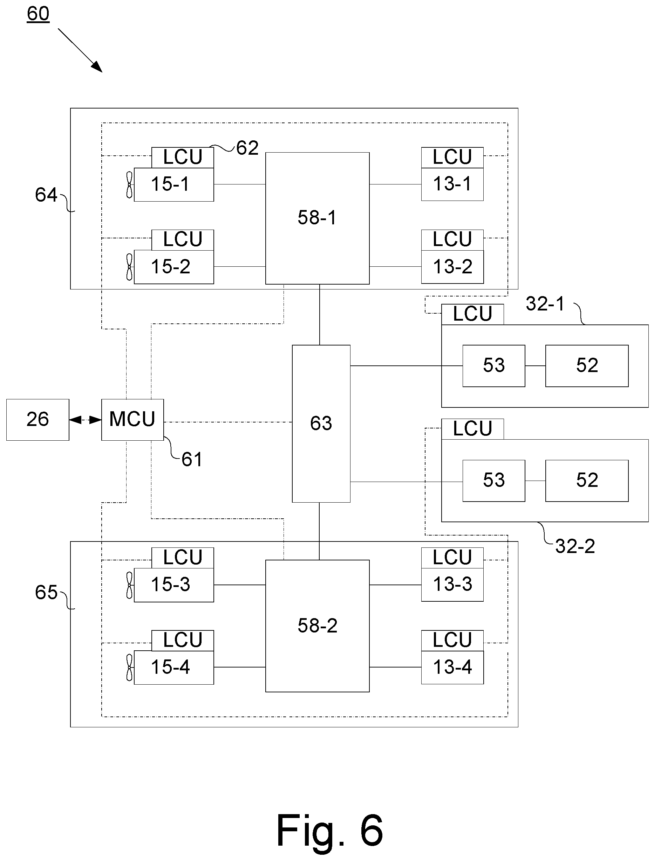

Figure 2 illustrates a system 20 for redistributing power in an aircraft comprising two powertrain units, each comprising an energy storage unit 13-1, 13-2 (commonly denoted 13) and a propulsion unit 15-1, 15-2 (commonly denoted 15) connected via a local DC bus 16-1, 16-2 (commonly denoted 16). Each propulsion unit 15 comprises an alternating current, AC, motor 11 and a DC/AC inverter 12, and the motor 11 is mechanically connected to a propeller 14. In some examples, the AC motor 11 is an induction motor and the DC/AC inverter is a variable frequency inverter. The energy storage unit 13 may be any type of unit configured to store electric energy, e.g. a battery or battery pack. The system further comprises a control system 21 configured to monitor operating status of each propulsion unit 15-1, 15-2 and each energy storage unit 13-1, 13-2 via a signal feed, which is illustrated by the dash-dotted lines 17-1, 17-2 (commonly denoted 17). The signal feed provides information relating to the operating status of the propulsion units and energy storage units to the control system 21. The control system may be a single control unit (as illustrated in Figures 2, 3, 4 and 5) or a distributed control system (as illustrated in Figure 6).

The control unit 21 is further configured to identify a malfunctioning unit (a signal indicating a malfunctioning unit has been detected is illustrated by A-D in Figure 2) from the group of propulsion units 15 and energy storage units 13 in the system via the signal feeds 17; and to control a set of reconfiguration switches 28 to disconnect the identified malfunctioning unit from the system and to reroute power from one or more energy storage units 13 to one or more propulsion units 15. In the illustrated example, control unit 21 monitors energy storage unit 13-1 via A (17-1), propulsion unit 15-1 via B (17-1), energy storage unit 13-2 via C (17-2), propulsion unit 15-2 via D (17-2). While A-D and 17-1, 17-2 are illustrated separately for purposes of clarity, in some examples, control unit 21 is connected to and monitors the energy storage units 13 and propulsion units 15 via a common digital network, such as a CANaerospace or ARINC network, and A-D comprise messages on the digital network. "Malfunctioning", as used herein, includes a failure of a unit and any operating condition that requires stopping use of the unit to maintain aircraft safety or to avoid damage to the unit.

Each switch in the set of reconfiguration switches 28 comprises in this example disconnect switches 22, 23 configured to connect/disconnect the energy storage unit 13 from the respective propulsion unit 15 in each powertrain unit by closing or opening the switch 22, 23 arranged in the local DC-bus 16-1, 16-2, provided rerouting switches 24, 25 are not bypassing a disconnect switch. The control system 21 is configured to control the position of the disconnect switch 22, 23 as illustrated by 18-1, 18-2 and isolate any identified malfunctioning unit A-D. Furthermore, the set of reconfiguration switches 28 also comprises rerouting switches 24, 25 arranged between the local DC busses 16-1, 16-2 of the powertrain units. Specifically, the rerouting switches may comprise a first rerouting switch 24 arranged between the powertrain units 10 upstream of the disconnect switch 22, 23 in each powertrain unit 10 and a second rerouting switch 25 arranged between the powertrain units 10 downstream of the disconnect switch 22, 23 in each powertrain unit 10. "Upstream", as used herein, may be construed as on the side of the disconnect switch 22, 23 closest to the energy storage units 13. "Downstream", as used herein, may be construed as on the side of the disconnect switch 22, 23 closest to the propulsion units 15. The rerouting switches 24, 25 are in this example controlled by a control signal, as illustrated by line 19, whereby first rerouting switch 24 may be set in at least two positions "1" or "2" and second rerouting switch 25 may be set in three positions "0", "1" or "2" dependent on the malfunctioning unit, where "0" is the neutral position during normal operations to prevent unintentional bypassing of an open disconnect switch 22, 23. A neutral position "0" (not shown) may also be implemented in rerouting switch 24 to increase safety.

This is illustrated by Table 1 below:

**Table 1**

| Malfunctioning unit | Switch 22 | Switch 23 | Switch 24 | Switch 25 |
|---|---|---|---|---|
| None | Closed | Closed | N/A | Position "0" |
| A | Open | Closed | Position "2" | Position "1" |
| B | Open | Closed | Position "1" | Position "2" |
| C | Closed | Open | Position "1" | Position "2" |
| D | Closed | Open | Position "2" | Position "1" |

During normal operation, the control unit 21 sets the disconnect switches 22, 23 in a closed position, the rerouting switch 24 in any position (as indicated by N/A or in neutral, position "0", if available) and rerouting switch 25 in position "0".

### Example 1

When the energy storage unit 13-1 malfunctions, the control system 21 receives information that "A" is malfunctioning and in response to this information, the control unit sets the disconnect switch 22 in an open position while maintaining disconnect switch 23 in a closed position, and the rerouting switch 24 is set in position "2" and the rerouting switch 25 in position "1" to connect the energy storage unit 13-2 to propulsion unit 15-1. Thus, energy storage unit 13-2 is powering both propulsion units 15-1 and 15-2.

### Example 2

When the propulsion unit 15-2 malfunctions, the control system 21 receives information that "D" is malfunctioning and in response to this information, the control unit sets the disconnect switch 23 in an open position while maintaining disconnect switch 22 in a closed position, and the rerouting switch 24 is set in position "2" and the rerouting switch 25 in position "1" to connect the energy storage unit 13-2 to propulsion unit 15-1. Thus, both energy storage units 13-1 and 13-2 are powering the propulsion unit 15-1.

The system also comprises an avionics system 26 that is configured to communicate with and to provide instructions to the control system 21, especially when a malfunctioning unit A-D has been identified. The instructions may be manually activated by the pilot or may be automatically generated by the avionics system 26.

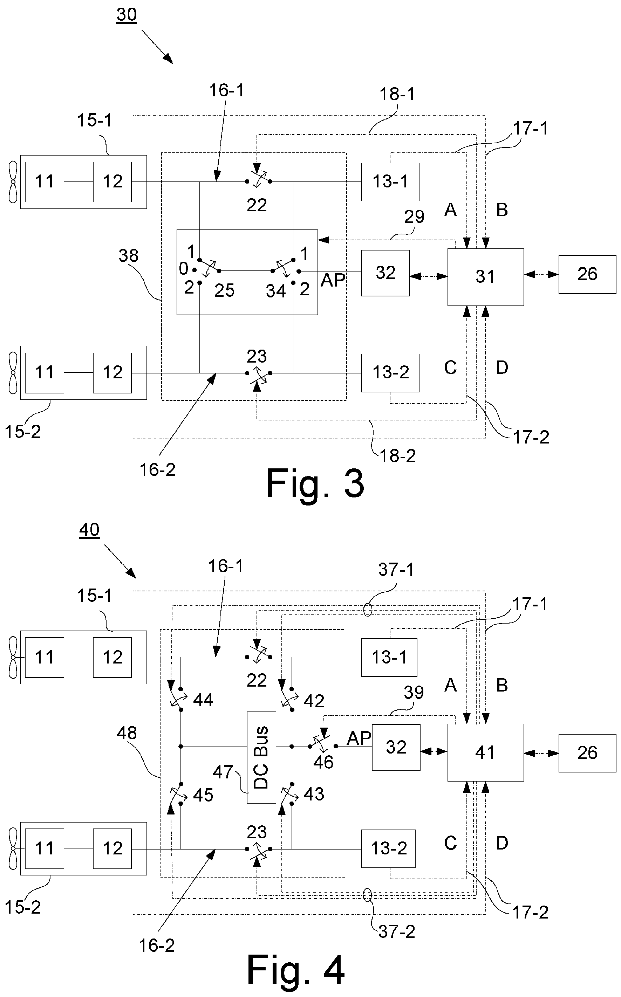

Figure 3 illustrates a first embodiment of a system 30 for redistributing power in an aircraft, e.g. during flight. The system 30 is similar to the system described in connection with figure 2 with the addition of an auxiliary power supply 32 and replacing the control system with a control system 31 with additional functionality together with an updated set of reconfiguration switches 38 where the two-way rerouting switch 24 in Figure 2 is replaced by a three-way rerouting switch 34. As such, the three-way rerouting switch 34 may be a first rerouting switch 34 arranged between the powertrain units 10 upstream of the disconnect switch 22, 23 in each powertrain unit 10. The rerouting switch 34 has one additional position "AP" (Auxiliary Power) to which the auxiliary power supply 32 is connected. A neutral position "0" (not shown) may also be implemented in rerouting switch 34 to increase safety.

The auxiliary power supply 32 is configured to provide power to the system if needed and the control system 31 is configured to:
- receive status information from the auxiliary power supply 32;
- control the operation of the auxiliary power supply 32, and
- provide power from the auxiliary power supply 32 to one or more of the propulsion units 15 by controlling the set of reconfiguration switches 38.

The rerouting switches 34, 25 are in this embodiment controlled by a control signal from the control system 31, as illustrated by line 29, whereby first rerouting switch 34 may be set in three positions "AP", "1" or "2" and second rerouting switch 25 may be set in three positions "0", "1" or "2" dependent on the malfunctioning unit. In this example, the rerouting switch "34" is mutually exclusive to connect "AP" and "13-1" or "AP" and "13-2" as illustrated below in example 3.

This is illustrated by Table 2 below:

**Table 2**

| Malfunctioning unit | Switch 22 | Switch 23 | Switch 24 | Switch 25 |
|---|---|---|---|---|
| None | Closed | Closed | N/A | Position "0" |
| A | Open | Closed | Position "AP" | Position "1" |
| B | Open | Closed | Position "1" | Position "2" |
| C | Closed | Open | Position "AP" | Position "2" |
| D | Closed | Open | Position "2" | Position "1" |

The auxiliary power supply is in this embodiment configured to provide power to the propulsion unit when the energy storage unit in that powertrain unit malfunctions, as well as providing extra power when required without any energy storage units malfunctions.

During normal operation, the control unit 31 sets the disconnect switches 22, 23 in a closed position, the rerouting switch 34 in any position (as indicated by N/A or in neutral, position "0", if available) and rerouting switch 25 in position "0".

### Example 3

When the energy storage unit 13-1 malfunctions, the control system 31 receives information that "A" is malfunctioning and in response to this information, the control unit sets the disconnect switch 22 in an open position while maintaining disconnect switch 23 in a closed position, and the rerouting switch 34 is set in position "AP" and the rerouting switch 25 in position "1" to connect the auxiliary power supply 32 to propulsion unit 15-1.

Figure 4 illustrates a second embodiment of a system 40 for redistributing power with an auxiliary power supply and a common DC bus 47. As in the previously described embodiments, system 40 comprises two powertrain units, each comprising an energy storage unit 13-1, 13-2 and a propulsion unit 15-1, 15, 2 connected via a local DC bus 16-1, 16-2 provided rerouting switches 42-45 are not bypassing a disconnect switch. The system further comprises a control system 41 configured to monitor operating status of each propulsion unit 15-1, 15-2 and each energy storage unit 13-1, 13-2 via a signal feed, which is illustrated by the dash-dotted lines 17-1, 17-2. The signal feed provides information relating to the operating status of the propulsion units and energy storage units to the control system 41.

System 40 further comprises an auxiliary power supply 32, which is configured to provide power to the system if needed and the control system 41 is configured to:
- receive status information from the auxiliary power supply 32;
- control the operation of the auxiliary power supply 32, and
- provide power from the auxiliary power supply 32 to one or more of the propulsion units 15 by controlling the set of reconfiguration switches 48.

The control unit 41 is further configured to identify a malfunctioning unit from the group of propulsion units 15 and energy storage units 13 in the system via the signal feeds 17; and to control a set of reconfiguration switches 48 to disconnect the identified malfunctioning unit from the system and to reroute power from one or more energy storage units 13 to one or more propulsion units 15.

Each switch in the set of reconfiguration switches 48 comprises in this embodiment disconnect switches 22, 23 configured to connect/disconnect the energy storage unit 13 from the respective propulsion unit 15 in each powertrain unit by closing or opening the switch 22, 23 arranged in the local DC-bus 16-1, 16-2. Furthermore, the set of reconfiguration switches 48 also comprises rerouting switches 42, 43, 44 and 45 arranged between the local DC busses 16-1, 16-2 of the powertrain units and the common DC bus 47 in order to selectively connect the energy storage units 13 and propulsion unit 15 to the common DC bus 47. Specifically, the rerouting switches may comprise first rerouting switches 42-43 arranged between the powertrain units 10 upstream of the disconnect switch 22, 23 in each powertrain unit 10 and second rerouting switches 44-45 arranged between the powertrain units 10 downstream of the disconnect switch 22, 23 in each powertrain unit 10.

The control system 41 is configured to control the position of the disconnect switch 22, 23 and the rerouting switches 42-45 as illustrated by 37-1, 37-2 and isolate any identified malfunctioning unit A-D. The set of reconfiguration switches may also comprise an auxiliary switch 46 controlled by a control signal, as illustrated by line 39, whereby the auxiliary power supply may be connected to the common DC bus 47 of the system 40.

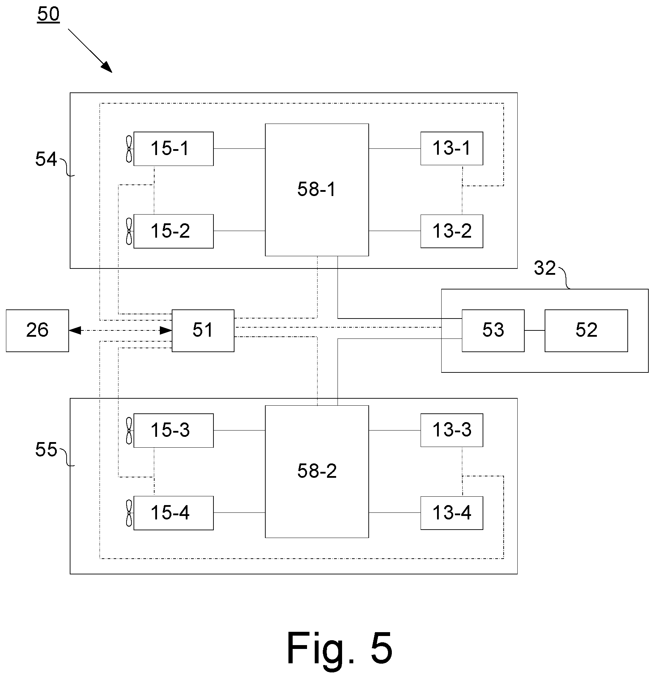

Figure 5 illustrates a third embodiment of a system 50 for redistributing power with two subsystems 54 and 55, one subsystem for each side of an aircraft (not shown). In this example embodiment, each sub system comprises two powertrain units (each comprising a propulsion unit 15 and an energy storage unit 13) with a set of reconfiguration switches 58-1 and 58-2 (commonly denoted 58). Examples of reconfiguration switches have been described in connection with figures 2-4.

The system 50 also comprises an auxiliary power supply 32 that is shared between the subsystems 58, and the auxiliary power supply 32 comprises a turbogenerator 52 supplying DC power to the system via a rectifier 53, when connected. A control system 51 is provided to receive indicative status of the propulsion units 15 and the energy storage units 13 and identify any malfunctioning unit in both subsystems 54 and 55, as well as handle the auxiliary power supply 32 as described above. An avionics system 26 is also provided that communicates with and provides instructions to the control system 51.

Figure 6 illustrates a fourth embodiment of a system 60 for redistributing power with two subsystems 64 and 65 and two auxiliary power supplies 32-1 and 32-2 (one auxiliary power supply for each side of an aircraft) and a distributed control system. The distributed control system comprises a master control unit, MCU, 61 and local control units, LCU, 62, wherein each LCU is configured to control operations in an energy storage unit 13, propulsion unit 15 and/or auxiliary power supply 32. The two sets of reconfiguration switches 58 are connected to an interconnecting network 63 configured to create an interconnecting DC bus by activating interconnecting switches (not shown) wherein the auxiliary power supplies 32-1 and 32-2 may be connected to the interconnecting DC bus based on the control signals provided by the MCU 61. Each LCU 62 controlling an energy storage unit 13 may be configured to control contactors to connect and disconnect the energy storage unit 13 from the system. The MCU 61 may be configured to communicate with the LCUs 62, which is illustrated by the dash-dotted lines in Figure 6.

### Example 4

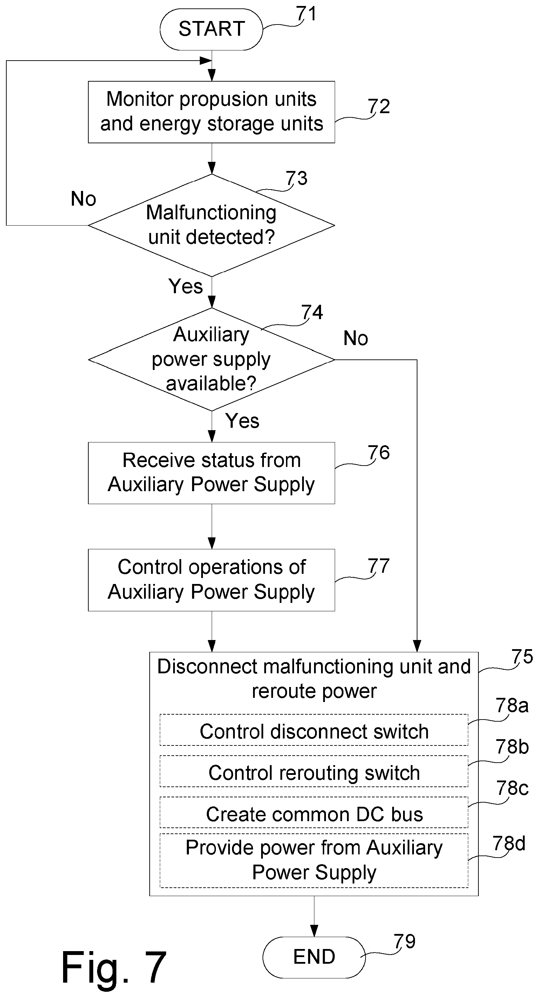

If energy storage unit 13-2 malfunctions, it is disconnected from the system (e.g. by the LCU controlling the energy storage unit) and one of the auxiliary power supplies (e.g. 32-1) is connected to the propulsion unit 15-2 in the first subsystem 64 via the interconnecting DC bus via interconnecting switches (not shown) within the interconnecting network 63 and the set of configuration switches 58-1. For instance, if the example embodiment illustrated in figure 4 is used then the interconnecting DC bus may be connected, by activating the interconnecting switches (not shown), to the common DC bus 47 inside the set of reconfiguration switches 48. Figure 7 is a flow chart illustrating a method for redistributing power in an aircraft with at least two electrical powertrain units 10, each powertrain unit 10 comprises a propulsion unit 15 powered by an energy storage unit 13, wherein the system further comprises a control system configured to perform the method.

The flow starts in 71, and in step 72 the control system monitors operating status of each propulsion unit 15 and each energy storage unit 13. This may be done by receiving a status update from each unit a regular interval. In the next step 73, the control system identifies a malfunctioning unit from the group of propulsion units 15 and energy storage units 13. The control system thereafter may perform an optional step 74, in which the control system checks if there is an auxiliary power supply available.

If no auxiliary power supply is available, then the flow continues to step 75 in which the control system controls at least one set of reconfiguration switches to disconnect the identified malfunctioning unit from the system and to reroute power from one or more energy storage units 13 to one or more propulsion units 15.

Step 75 may comprise several steps and in a first option, provided the at least one set of reconfiguration switches further comprises disconnect switches and/or rerouting switches, the step of controlling the at least one set of reconfiguration switches further comprises the step of controlling 78a the disconnect switch arranged between the energy storage unit and the propulsion unit in each power train; and/or the step of controlling 78b the rerouting switches arranged between the at least two powertrain units. Another option also includes the possibility for the control system to perform the step of controlling 78c the at least one set of reconfiguration switches in order to connect at least one energy storage unit and at least one propulsion unit to at least one common DC bus.

In case the auxiliary power supply is available, the flow continues from step 74 to step 76, where the control system is further configured to perform the step of receiving status information from the auxiliary power supply. In step 77, the control system is configured to perform the step of controlling the operation of the auxiliary power supply. The flow thereafter continues to step 75, where an optional step 78d is available due to the present of the auxiliary power supply, wherein the control is configured to provide power from the auxiliary power supply to one or more of the propulsion units by controlling the at least one set of reconfiguration switches. The flow ends in step 79.

The present disclosure relates to a system for redistributing power in an aircraft with at least two electrical powertrain units and a control system. Each powertrain unit comprises a propulsion unit and an energy storage unit, wherein the propulsion unit is powered by the energy storage unit. In normal operation, power from the energy storage unit of one powertrain unit is not applied to the other powertrain unit. The control system is configured to:
- monitor operating status of each propulsion unit and each energy storage unit
- identify a malfunctioning unit from the group of propulsion units and energy storage units, and
- control at least one set of reconfiguration switches to disconnect the identified malfunctioning unit from the system and to reroute power from one or more energy storage units to one or more propulsion units.

According to some embodiments, the at least one set of reconfiguration switches comprises at least one disconnect switch arranged between the energy storage unit and the propulsion unit in each powertrain unit.

According to some embodiments, the at least one set of reconfiguration switches comprises rerouting switches arranged between the at least two powertrain units.

According to some embodiments, the control system is further configured to control the at least one set of reconfiguration switches in order to connect at least one energy storage unit and at least one propulsion unit to at least one common DC bus. If an auxiliary power supply is provided, the auxiliary power supply may be connected to the common DC bus.

The system further comprises an auxiliary power supply, e.g. a turbogenerator via a rectifier, which is configured to provide extra power to the system, wherein the control system is configured to:
- receive status information from the auxiliary power supply,
- control the operation of the auxiliary power supply, and
- provide power from the auxiliary power supply to one or more of the propulsion units by controlling the at least one set of reconfiguration switches.

According to some embodiments, the at least one set of reconfiguration switches comprises at least one auxiliary switch, which is controlled by the control system to connect the auxiliary power supply to the system.

According to some embodiments, the control system comprises a master control unit, MCU, and local control units, LCU, wherein each LCU is configured to control operations in an energy storage unit and/or propulsion unit. If one or more auxiliary power supplies are provided, an LCU may be provided to control operations in each auxiliary power supply.

According to some embodiments, the system further comprises an avionics system configured to communicate with and to provide instructions to the control system when a malfunctioning unit has been identified. Instructions may be manually by the pilot or automatically by the avionics system.

According to some embodiments, the rerouting switches comprise at least one first rerouting switch upstream of the at least one disconnect switch in each powertrain unit and at least one second rerouting switch downstream of the at least one disconnect switch in each powertrain unit. It should be noted that this example embodiment may be implemented without the above-mentioned auxiliary power supply.

The present disclosure further relates to a method for redistributing power in an aircraft with a system comprising at least two electrical powertrain units, an auxiliary power supply configured to provide extra power to the system and a control system. Each powertrain unit comprises a propulsion unit and an energy storage unit, wherein the propulsion unit is powered by the energy storage unit. The auxiliary power supply comprises a turbogenerator supplying DC power to the system via a rectifier, when connected.

The control system is configured to perform the steps of:
- monitoring operating status of each propulsion unit and each energy storage unit,
- identifying a malfunctioning unit from the group of propulsion units and energy storage units, and
- controlling at least one set of reconfiguration switches to disconnect the identified malfunctioning unit from the system and to reroute power from one or more energy storage units to one or more propulsion units.

The control system is furthermore configured to perform the steps of :
- receiving status information from the auxiliary power supply;
- controlling the operation of the auxiliary power supply, and
- providing power from the auxiliary power supply to one or more of the propulsion units by controlling the at least one set of reconfiguration switches.

According to some embodiments, the at least one set of reconfiguration switches further comprises disconnect switches and/or rerouting switches; and the step of controlling the at least one set of reconfiguration switches further comprises:
- controlling the disconnect switch arranged between the energy storage unit and the propulsion unit in each power train, and/or
- controlling the rerouting switches arranged between the at least two powertrain units.

According to some embodiments, the control system is further configured to perform the step of controlling the at least one set of reconfiguration switches in order to connect at least one energy storage unit and at least one propulsion unit to at least one common DC bus.

The present disclosure further relates to a computer program for redistributing power in an aircraft, comprising instructions which, when executed on at least one processor, cause the at least one processor to carry out the steps of the control system in the methods identified above. The present disclosure further relates to a computer-readable storage medium carrying a computer program for redistributing power in an aircraft according to any of the embodiments identified above.

The present disclosure further relates to an aircraft comprising a system according to any of the embodiments identified above. The present disclosure further relates to an aircraft comprising a system according to some embodiments for redistributing power with two subsystems, one subsystem for each side of the aircraft, wherein each subsystem comprises two powertrain units with a set of reconfiguration switches, each powertrain unit comprising a propulsion unit and an energy storage unit, wherein the system comprises two auxiliary power supplies, one auxiliary power supply for each side of the aircraft, and wherein the two sets of reconfiguration switches are connected to an interconnecting network configured to create an interconnecting DC bus by activating interconnecting switches, and wherein the auxiliary power supplies are connectable to the interconnecting DC bus based on control signals provided by the MCU.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the invention being defined by the following claims.

## Claims

1. A system (20; 30; 40; 50; 60) for redistributing power in an aircraft, the system comprising at least two electrical powertrain units (10), each powertrain unit (10) comprises a propulsion unit (15) powered by an energy storage unit (13), wherein the system further comprises a control system (21; 31; 41; 51; 61) configured to:
- monitor operating status of each propulsion unit (15) and each energy storage unit (13);
- identify a malfunctioning unit from the group of propulsion units (15) and energy storage units (13); and
- control at least one set of reconfiguration switches (28; 38; 48; 58) to disconnect the identified malfunctioning unit from the system and to reroute power from one or more of the energy storage units (13) to one or more propulsion units (15),
the system further comprising an auxiliary power supply (32) configured to provide extra power to the system, wherein the control system (31; 41: 51; 61) is configured to:
- receive status information from the auxiliary power supply (32);
- control the operation of the auxiliary power supply (32), and
- provide power from the auxiliary power supply (32) to one or more of the propulsion units (15) by controlling the at least one set of reconfiguration switches (38; 48; 58),
wherein the auxiliary power supply comprises a turbogenerator (52) supplying DC power to the system via a rectifier (53), when connected.

2. The system according to claim 1, wherein the at least one set of reconfiguration switches (28; 38; 48) comprises at least one disconnect switch (22, 23) arranged between the energy storage unit (13) and the propulsion unit (15) in each powertrain unit (10).

3. The system according to claim 1 or 2, wherein the at least one set of reconfiguration switches (28; 38; 48) comprises rerouting switches (24,25; 34; 42-45) arranged between the at least two powertrain units (10).

4. The system according to any of claims 1-3, wherein the control system (41) is further configured to control the at least one set of reconfiguration switches (48) in order to connect at least one energy storage unit (13) and at least one propulsion unit (15) to at least one common DC bus (47).

5. The system according to claim 1, wherein the at least one set of reconfiguration switches (48) comprises at least one auxiliary switch (46) which is controlled by the control system (41) to connect the auxiliary power supply (32) to the system (40).

6. The system according to claim 1 or 5, when dependent on claim 4, wherein the auxiliary power supply (32) is connected to the common DC bus (47).

7. The system according to any of claims 1-6, wherein the control system (60) comprises a master control unit, MCU, (61) and local control units, LCU, (62), wherein each LCU is configured to control operations in an energy storage unit (13), propulsion unit (15) and/or auxiliary power supply (32).

8. The system according to any of claims 1-7, further comprising an avionics system (26) configured to communicate with and to provide instructions to the control system (21; 31; 41; 51; 61) when a malfunctioning unit has been identified.

9. The system according to claims 2 and 3, wherein the rerouting switches comprise at least one first rerouting switch (24; 34; 42-43) upstream of the at least one disconnect switch (22, 23) in each powertrain unit (10) and at least one second rerouting switch (25; 44-45) downstream of the at least one disconnect switch (22, 23) in each powertrain unit (10).

10. A method for redistributing power in an aircraft with a system comprising at least two electrical powertrain units (10), each powertrain unit (10) comprises a propulsion unit (15) powered by an energy storage unit (13), wherein the system further comprises a control system (21; 31; 41; 51) configured to perform the steps of:
- monitoring (72) operating status of each propulsion unit (15) and each energy storage unit (13);
- identifying (73) a malfunctioning unit (A-D) from the group of propulsion units (15) and energy storage units (13); and
- controlling (75) at least one set of reconfiguration switches (28; 38; 48; 58) to disconnect the identified malfunctioning unit (A-D) from the system and to reroute power from one or more of the energy storage units (13) to one or more propulsion units (15),
wherein the system further comprises an auxiliary power supply configured to provide extra power to the system, wherein the control system is further configured to perform the steps of:
- receiving (76) status information from the auxiliary power supply;
- controlling (77) the operation of the auxiliary power supply, and
- providing power (78d) from the auxiliary power supply to one or more of the propulsion units by controlling the at least one set of reconfiguration switches,
wherein the auxiliary power supply comprises a turbogenerator (52) supplying DC power to the system via a rectifier (53), when connected.

11. The method according to claim 10, wherein the at least one set of reconfiguration switches further comprises disconnect switches and/or rerouting switches; and the step of controlling the at least one set of reconfiguration switches further comprises:
- controlling (78a) the disconnect switch arranged between the energy storage unit and the propulsion unit in each power train; and/or
- controlling (78b) the rerouting switches arranged between the at least two powertrain units.

12. The method according to any of claims 10 or 11, wherein the control system is further configured to perform the step of controlling (78c) the at least one set of reconfiguration switches in order to connect at least one energy storage unit and at least one propulsion unit to at least one common DC bus.

13. A computer program for redistributing power in an aircraft, comprising instructions which, when executed on at least one processor, cause the at least one processor to carry out the steps of the control system in a any of claims 10-12.

14. A computer-readable storage medium carrying a computer program for redistributing power in an aircraft according to claim 13.

15. An aircraft comprising a system (60) according to claim 7 for redistributing power with two subsystems (64, 65), one subsystem for each side of the aircraft, wherein each subsystem comprises two powertrain units with a set of reconfiguration switches (58-1, 58-2), each powertrain unit comprising a propulsion unit (15) and an energy storage unit (13), wherein the system (60) comprises two auxiliary power supplies (32-1, 32-2), one auxiliary power supply for each side of the aircraft, and wherein the two sets of reconfiguration switches (58-1, 58-2) are connected to an interconnecting network (63) configured to create an interconnecting DC bus by activating interconnecting switches, and wherein the auxiliary power supplies (32-1, 32-2) are connectable to the interconnecting DC bus based on control signals provided by the MCU (61).

## Patentansprüche

1. Ein System (20; 30; 40; 50; 60) zum Umverteilen von Leistung in einem Flugzeug, wobei das System mindestens zwei elektrische Antriebsstrangeinheiten (10) beinhaltet, wobei jede Antriebsstrangeinheit (10) eine Antriebseinheit (15) beinhaltet, die durch eine Energiespeichereinheit (13) mit Leistung versorgt wird, wobei das System ferner ein Steuersystem (21; 31; 41; 51; 61) beinhaltet, das konfiguriert ist zum:
- Überwachen des Betriebsstatus jeder Antriebseinheit (15) und jeder Energiespeichereinheit (13);
- Identifizieren einer fehlerhaften Einheit aus der Gruppe von Antriebseinheiten (15) und Energiespeichereinheiten (13); und
- Steuern mindestens eines Satzes von Rekonfigurationsschaltern (28; 38; 48; 58), um die identifizierte fehlerhafte Einheit von dem System zu trennen und Leistung von einer oder mehreren der Energiespeichereinheiten (13) zu einer oder mehreren Antriebseinheiten (15) umzuleiten,
wobei das System ferner eine Hilfsleistungsversorgung (32) beinhaltet, die konfiguriert ist, um dem System zusätzliche Leistung bereitzustellen, wobei das Steuersystem (31; 41; 51; 61) konfiguriert ist zum:
- Empfangen von Statusinformationen von der Hilfsleistungsversorgung (32);
- Steuern des Betriebs der Hilfsleistungsversorgung (32), und
- Bereitstellen von Leistung von der Hilfsleistungsversorgung (32) an eine oder mehrere der Antriebseinheiten (15) durch Steuern des mindestens einen Satzes von Rekonfigurationsschaltern (38; 48; 58),
wobei die Hilfsleistungsversorgung einen Turbogenerator (52) beinhaltet, der dem System über einen Gleichrichter (53) Gleichstromleistung zuführt, wenn er verbunden ist.

2. System gemäß Anspruch 1, wobei der mindestens eine Satz von Rekonfigurationsschaltern (28; 38; 48) mindestens einen Trennschalter (22, 23) beinhaltet, der zwischen der Energiespeichereinheit (13) und der Antriebseinheit (15) in jeder Antriebsstrangeinheit (10) angeordnet ist.

3. System gemäß Anspruch 1 oder 2, wobei der mindestens eine Satz von Rekonfigurationsschaltern (28; 38; 48) Umleitungsschalter (24, 25; 34; 42-45) beinhaltet, die zwischen den mindestens zwei Antriebsstrangeinheiten (10) angeordnet sind.

4. System gemäß einem der Ansprüche 1-3, wobei das Steuersystem (41) ferner konfiguriert ist, um den mindestens einen Satz von Rekonfigurationsschaltern (48) zu steuern, um mindestens eine Energiespeichereinheit (13) und mindestens eine Antriebseinheit (15) mit mindestens einem gemeinsamen Gleichstrombus (47) zu verbinden.

5. System gemäß Anspruch 1, wobei der mindestens eine Satz von Rekonfigurationsschaltern (48) mindestens einen Hilfsschalter (46) beinhaltet, der von dem Steuersystem (41) gesteuert wird, um die Hilfsleistungsversorgung (32) mit dem System (40) zu verbinden.

6. System gemäß Anspruch 1 oder 5 in Abhängigkeit von Anspruch 4, wobei die Hilfsleistungsversorgung (32) mit dem gemeinsamen Gleichstrombus (47) verbunden ist.

7. System gemäß einem der Ansprüche 1-6, wobei das Steuersystem (60) eine Hauptsteuereinheit, MCU, (61) und lokale Steuereinheiten, LCU, (62) beinhaltet, wobei jede LCU konfiguriert ist, um den Betrieb in einer Energiespeichereinheit (13), Antriebseinheit (15) und/oder Hilfsleistungsversorgung (32) zu steuern.

8. System gemäß einem der Ansprüche 1-7, das ferner ein Avioniksystem (26) beinhaltet, das konfiguriert ist, um mit dem Steuersystem (21; 31; 41; 51; 61) zu kommunizieren und Anweisungen an dieses bereitzustellen, wenn eine fehlerhafte Einheit identifiziert wurde.

9. System gemäß den Ansprüchen 2 und 3, wobei die Umleitungsschalter mindestens einen ersten Umleitungsschalter (24; 34; 42-43) stromaufwärts von dem mindestens einen Trennschalter (22, 23) in jeder Antriebsstrangeinheit (10) und mindestens einen zweiten Umleitungsschalter (25; 44-45) stromabwärts von dem mindestens einen Trennschalter (22, 23) in jeder Antriebsstrangeinheit (10) beinhalten.

10. Ein Verfahren zum Umverteilen von Leistung in einem Flugzeug mit einem System, das mindestens zwei elektrische Antriebsstrangeinheiten (10) beinhaltet, wobei jede Antriebsstrangeinheit (10) eine Antriebseinheit (15) beinhaltet, die durch eine Energiespeichereinheit (13) mit Leistung versorgt wird, wobei das System ferner ein Steuersystem (21; 31; 41; 51) beinhaltet, das konfiguriert ist, um die folgenden Schritte durchzuführen:
- Überwachen (72) des Betriebsstatus jeder Antriebseinheit (15) und jeder Energiespeichereinheit (13);
- Identifizieren (73) einer fehlerhaften Einheit (A-D) aus der Gruppe von Antriebseinheiten (15) und Energiespeichereinheiten (13); und
- Steuern (75) mindestens eines Satzes von Rekonfigurationsschaltern (28; 38; 48; 58), um die identifizierte fehlerhafte Einheit (A-D) von dem System zu trennen und Leistung von einer oder mehreren der Energiespeichereinheiten (13) zu einer oder mehreren Antriebseinheiten (15) umzuleiten,
wobei das System ferner eine Hilfsleistungsversorgung beinhaltet, die konfiguriert ist, um dem System zusätzliche Leistung bereitzustellen, wobei das Steuersystem ferner konfiguriert ist, um die folgenden Schritte durchzuführen:
- Empfangen (76) von Statusinformationen von der Hilfsleistungsversorgung;
- Steuern (77) des Betriebs der Hilfsleistungsversorgung, und
- Bereitstellen von Leistung (78d) von der Hilfsleistungsversorgung an eine oder mehrere der Antriebseinheiten durch Steuern des mindestens einen Satzes von Rekonfigurationsschaltern,
wobei die Hilfsleistungsversorgung einen Turbogenerator (52) beinhaltet, der dem System über einen Gleichrichter (53) Gleichstromleistung zuführt, wenn er verbunden ist.

11. Verfahren gemäß Anspruch 10, wobei der mindestens eine Satz von Rekonfigurationsschaltern ferner Trennschalter und/oder Umleitungsschalter beinhaltet; und der Schritt des Steuerns des mindestens einen Satzes von Rekonfigurationsschaltern ferner Folgendes beinhaltet:
- Steuern (78a) des Trennschalters, der zwischen der Energiespeichereinheit und der Antriebseinheit in jedem Antriebsstrang angeordnet ist; und/oder
- Steuern (78b) der Umleitungsschalter, die zwischen den mindestens zwei Antriebsstrangeinheiten angeordnet sind.

12. Verfahren gemäß einem der Ansprüche 10 oder 11, wobei das Steuersystem ferner konfiguriert ist, um den Schritt des Steuerns (78c) des mindestens einen Satzes von Rekonfigurationsschaltern durchzuführen, um mindestens eine Energiespeichereinheit und mindestens eine Antriebseinheit mit mindestens einem gemeinsamen Gleichstrombus zu verbinden.

13. Ein Computerprogramm zum Umverteilen von Leistung in einem Flugzeug, das Anweisungen beinhaltet, die, wenn sie auf mindestens einem Prozessor ausgeführt werden, den mindestens einen Prozessor veranlassen, die Schritte des Steuersystems in einem der Ansprüche 10-12 auszuführen.

14. Ein computerlesbares Speichermedium, das ein Computerprogramm zum Umverteilen von Leistung in einem Flugzeug gemäß Anspruch 13 trägt.

15. Ein Flugzeug, das ein System (60) gemäß Anspruch 7 zum Umverteilen von Leistung mit zwei Teilsystemen (64, 65) beinhaltet, einem Teilsystem für jede Seite des Flugzeugs, wobei jedes Teilsystem zwei Antriebsstrangeinheiten mit einem Satz von Rekonfigurationsschaltern (58-1, 58-2) beinhaltet, wobei jede Antriebsstrangeinheit eine Antriebseinheit (15) und eine Energiespeichereinheit (13) beinhaltet, wobei das System (60) zwei Hilfsleistungsversorgungen (32-1, 32-2) beinhaltet, eine Hilfsleistungsversorgung für jede Seite des Flugzeugs, und wobei die zwei Sätze von Rekonfigurationsschaltern (58-1, 58-2) mit einem Verbindungsnetzwerk (63) verbunden sind, das konfiguriert ist, um einen Verbindungsgleichstrombus durch Aktivieren von Verbindungsschaltern zu erzeugen, und wobei die Hilfsleistungsversorgungen (32-1, 32-2) mit dem Verbindungsgleichstrombus basierend auf Steuersignalen, die durch die MCU (61) bereitgestellt werden, verbindbar sind.

## Revendications

1. Un système (20 ; 30 ; 40 ; 50 ; 60) pour redistribuer de l'alimentation dans un aéronef, le système comprenant au moins deux unités de groupe motopropulseur électrique (10), chaque unité de groupe motopropulseur (10) comprend une unité de propulsion (15) alimentée par une unité de stockage d'énergie (13), le système comprenant en outre un système de commande (21 ; 31 ; 41 ; 51 ; 61) configuré pour :
- surveiller l'état de fonctionnement de chaque unité de propulsion (15) et de chaque unité de stockage d'énergie (13) ;
- identifier une unité défaillante dans le groupe d'unités de propulsion (15) et d'unités de stockage d'énergie (13) ; et
- commander au moins un ensemble de commutateurs de reconfiguration (28 ; 38 ; 48 ; 58) pour déconnecter l'unité défaillante identifiée du système et pour rediriger l'alimentation d'une ou de plusieurs des unités de stockage d'énergie (13) vers une ou plusieurs unités de propulsion (15),
le système comprenant en outre un bloc d'alimentation auxiliaire (32) configuré pour fournir de l'alimentation supplémentaire au système, le système de commande (31 ; 41 ; 51 ; 61) étant configuré pour :
- recevoir des informations d'état en provenance du bloc d'alimentation auxiliaire (32) ;
- commander le fonctionnement du bloc d'alimentation auxiliaire (32), et
- fournir de l'alimentation du bloc d'alimentation auxiliaire (32) à une ou plusieurs des unités de propulsion (15) en commandant l'au moins un ensemble de commutateurs de reconfiguration (38 ; 48 ; 58),
dans lequel le bloc d'alimentation auxiliaire comprend un turbogénérateur (52) apportant de l'alimentation CC au système par l'intermédiaire d'un redresseur (53), lorsqu'il est connecté.

2. Le système selon la revendication 1, dans lequel l'au moins un ensemble de commutateurs de reconfiguration (28 ; 38 ; 48) comprend au moins un commutateur de déconnexion (22, 23) agencé entre l'unité de stockage d'énergie (13) et l'unité de propulsion (15) dans chaque unité de groupe motopropulseur (10).

3. Le système selon la revendication 1 ou la revendication 2, dans lequel l'au moins un ensemble de commutateurs de reconfiguration (28 ; 38 ; 48) comprend des commutateurs de redirection (24, 25 ; 34 ; 42-45) agencés entre les au moins deux unités de groupe motopropulseur (10).

4. Le système selon n'importe lesquelles des revendications 1 à 3, dans lequel le système de commande (41) est en outre configuré pour commander l'au moins un ensemble de commutateurs de reconfiguration (48) afin de connecter au moins une unité de stockage d'énergie (13) et au moins une unité de propulsion (15) à au moins un bus CC commun (47).

5. Le système selon la revendication 1, dans lequel l'au moins un ensemble de commutateurs de reconfiguration (48) comprend au moins un commutateur auxiliaire (46) qui est commandé par le système de commande (41) pour connecter le bloc d'alimentation auxiliaire (32) au système (40).

6. Le système selon la revendication 1 ou la revendication 5, lorsqu'elle dépend de la revendication 4, dans lequel le bloc d'alimentation auxiliaire (32) est connecté au bus CC commun (47).

7. Le système selon n'importe lesquelles des revendications 1 à 6, dans lequel le système de commande (60) comprend une unité de commande principale *(master control unit,* MCU) (61) et des unités de commande locales *(local control unit,* LCU) (62), chaque LCU étant configurée pour commander des fonctionnements dans une unité de stockage d'énergie (13), une unité de propulsion (15) et/ou un bloc d'alimentation auxiliaire (32).

8. Le système selon n'importe lesquelles des revendications 1 à 7, comprenant en outre un système d'avionique (26) configuré pour communiquer avec le système de commande (21 ; 31 ; 41 ; 51 ; 61) et pour fournir des instructions à celui-ci lorsqu'une unité défaillante a été identifiée.

9. Le système selon les revendications 2 et 3, dans lequel les commutateurs de redirection comprennent au moins un premier commutateur de redirection (24 ; 34 ; 42-43) en amont de l'au moins un commutateur de déconnexion (22, 23) dans chaque unité de groupe motopropulseur (10) et au moins un deuxième commutateur de redirection (25 ; 44-45) en aval de l'au moins un commutateur de déconnexion (22, 23) dans chaque unité de groupe motopropulseur (10).

10. Un procédé pour redistribuer de l'alimentation dans un aéronef avec un système comprenant au moins deux unités de groupe motopropulseur électrique (10), chaque unité de groupe motopropulseur (10) comprend une unité de propulsion (15) alimentée par une unité de stockage d'énergie (13), dans lequel le système comprend en outre un système de commande (21 ; 31 ; 41 ; 51) configuré pour effectuer les étapes :
- de surveillance (72) de l'état de fonctionnement de chaque unité de propulsion (15) et de chaque unité de stockage d'énergie (13) ;
- d'identification (73) d'une unité défaillante (A-D) dans le groupe d'unités de propulsion (15) et d'unités de stockage d'énergie (13) ; et
- de commande (75) d'au moins un ensemble de commutateurs de reconfiguration (28 ; 38 ; 48 ; 58) pour déconnecter l'unité défaillante (A-D) identifiée du système et pour rediriger l'alimentation d'une ou de plusieurs des unités de stockage d'énergie (13) vers une ou plusieurs unités de propulsion (15),
dans lequel le système comprend en outre un bloc d'alimentation auxiliaire configuré pour fournir de l'alimentation supplémentaire au système, dans lequel le système de commande est en outre configuré pour effectuer les étapes :
- de réception (76) d'informations d'état en provenance du bloc d'alimentation auxiliaire ;
- de commande (77) du fonctionnement du bloc d'alimentation auxiliaire, et
- de fourniture d'alimentation (78d) du bloc d'alimentation auxiliaire à une ou plusieurs des unités de propulsion en commandant l'au moins un ensemble de commutateurs de reconfiguration,
dans lequel le bloc d'alimentation auxiliaire comprend un turbogénérateur (52) apportant de l'alimentation CC au système par l'intermédiaire d'un redresseur (53), lorsqu'il est connecté.

11. Le procédé selon la revendication 10, dans lequel l'au moins un ensemble de commutateurs de reconfiguration comprend en outre des commutateurs de déconnexion et/ou des commutateurs de redirection ; et l'étape de commande de l'au moins un ensemble de commutateurs de reconfiguration comprend en outre :
- la commande (78a) du commutateur de déconnexion agencé entre l'unité de stockage d'énergie et l'unité de propulsion dans chaque groupe motopropulseur ; et/ou
- la commande (78b) des commutateurs de redirection agencés entre les au moins deux unités de groupe motopropulseur.

12. Le procédé selon n'importe lesquelles des revendications 10 ou 11, dans lequel le système de commande est en outre configuré pour effectuer l'étape de commande (78c) de l'au moins un ensemble de commutateurs de reconfiguration afin de connecter au moins une unité de stockage d'énergie et au moins une unité de propulsion à au moins un bus CC commun.

13. Un programme d'ordinateur pour redistribuer de l'alimentation dans un aéronef, comprenant des instructions qui, lorsqu'elles sont exécutées sur au moins un processeur, amènent l'au moins un processeur à mettre en œuvre les étapes du système de commande dans n'importe lesquelles des revendications 10 à 12.

14. Un support de stockage lisible par ordinateur portant un programme d'ordinateur pour redistribuer de l'alimentation dans un aéronef selon la revendication 13.

15. Un aéronef comprenant un système (60) selon la revendication 7 pour redistribuer de l'alimentation avec deux sous-systèmes (64, 65), un sous-système pour chaque côté de l'aéronef, chaque sous-système comprenant deux unités de groupe motopropulseur avec un ensemble de commutateurs de reconfiguration (58-1, 58-2), chaque unité de groupe motopropulseur comprenant une unité de propulsion (15) et une unité de stockage d'énergie (13), le système (60) comprenant deux blocs d'alimentation auxiliaires (32-1, 32-2), un bloc d'alimentation auxiliaire pour chaque côté de l'aéronef, et les deux ensembles de commutateurs de reconfiguration (58-1, 58-2) étant connectés à un réseau d'interconnexion (63) configuré pour créer un bus CC d'interconnexion en activant des commutateurs d'interconnexion, et les blocs d'alimentation auxiliaires (32-1, 32-2) étant en mesure d'être connectés au bus CC d'interconnexion sur la base de signaux de commande fournis par la MCU (61).
